# EUROPÄISCHE PATENTSCHRIFT

(11) **EP 3 335 820 B1**
(45) Veröffentlichungstag und Bekanntmachung des Hinweises auf die Patenterteilung: **01.07.2020**
(21) Anmeldenummer: 17206956.9
(22) Anmeldetag: 13.12.2017
(51) Int. Cl.: B22F 3/15, B22F 7/06, B23K 20/02, C22C 19/05, C22C 19/07, C22C 38/22, B22F 7/08, B23K 20/227, C22C 38/02, C22C 38/04, C22C 38/26, C22C 38/44, C22C 38/46, C22C 38/48, C22C 38/56, C22C 1/04, C22C 33/02, B23K 103/18

(54) **VERBUNDKÖRPER UND VERFAHREN ZU SEINER HERSTELLUNG**
COMPOSITE BODY AND METHOD FOR ITS PRODUCTION
CORPS COMPOSITE ET SON PROCÉDÉ DE FABRICATION

(30) Priorität: 13.12.2016 DE 102016124213
(43) Veröffentlichungstag der Anmeldung: 20.06.2018
(73) Patentinhaber: Saar-Pulvermetall GmbH, 66793 Saarwellingen (DE)
(72) Erfinder: Hamentgen, Dr.-Ing. Michael, 66787 Wadgassen (DE)
(74) Vertreter: Patentanwälte Bernhardt / Wolff Partnerschaft mbB

(56) Entgegenhaltungen:
- EP-A1- 1 626 100
- EP-A2- 0 426 101
- US-A- 5 752 770
- GRETA LINDWALL ET AL: "Experimental and Theoretical Investigations of Hot Isostatically Pressed-Produced Stainless Steel/High Alloy Tool Steel Compound Materials", METALLURGICAL AND MATERIALS TRANSACTIONS A, SPRINGER-VERLAG, NEW YORK, Bd. 42, Nr. 5, 8. Dezember 2010 (2010-12-08), Seiten 1165-1172, XP035069991, ISSN: 1543-1940, DOI: 10.1007/S11661-010-0480-3

## Beschreibung

Die Erfindung betrifft einen Verbundkörper, der einen ersten Teil, der aus einer ersten Legierung gebildet ist, und einen zweiten Teil, der aus einer zweiten Legierung gebildet ist, umfasst, wobei die Teile durch Diffusion von Legierungselementen des ersten und/oder des zweiten Teils in den jeweils anderen Teil miteinander verbunden sind.
Die Erfindung betrifft ferner ein Verfahren zur Herstellung des Verbundkörpers.

Solche durch Benutzung bekannten Verbundkörper werden durch Diffusionsschweißen oder Heißisostatisches Pressen (HIP) hergestellt. Die Ausbildung der Verbindung erfolgt durch Austausch von Legierungselementen an der Grenzfläche zwischen den beiden Teilen unter Ausbildung eines mechanischen Zusammenhalts. Problematisch ist, dass es bei der Abkühlung des Verbundkörpers dadurch, dass die Teile unterschiedliche thermische Ausdehnungskoeffizienten haben, oftmals zu Spannungen kommt, die zu Rissen im Bereich der Grenzfläche und damit zu mangelnder Stabilität des Verbundkörpers führen.

Aus der Patentschrift AT 411739 B geht ein Verfahren hervor, bei dem ein Extrudergehäuse aus einem Grundkörper aus einer ersten Legierung und einer Beschichtung, die aus Pulver einer hochkarbidhaltigen Legierung gebildet ist, hergestellt wird. Die Herstellung erfolgt durch gemeinsame Kapselung des Grundkörpers und der Beschichtung sowie anschließendem Heißisostatischen Pressen. Als Grundkörper wird ein warmfester oder hochwarmfester Stahl mit mindestens 11,2 Gew.-% Cr und mindestens 2,1 Gew.-% Ni verwendet, wobei der Nickelgehalt benötigt wird um die Festigkeitsanforderungen unter Temperaturbeanspruchung des Extrudergehäuses zu erfüllen. Bei diesem Stahl bildet sich bei der Abkühlung Nickelmartensit, der zur Versprödung führt und eine Volumenänderung des Grundkörpers zur Folge hat, die sich von derjenigen der Beschichtung deutlich unterscheidet.

In der Patentschrift DE 4328160 C2 wird ein Verfahren zur Herstellung einer Schneckenwelle einer Schneckenstrangpresse für thermoplastische Kunststoffe beschrieben, bei dem ein Verbund eines schmelzmetallurgisch hergestellten Stahlkerns mit einem korrosions- und verschleissfesten Pulvermaterial durch HIP gebildet wird. Verwendet wird für den Kern ein handelsüblicher Baustahl aus St. 52 nach DIN (heute S355J2+N). Auch hier kommt es im Stahlkern aufgrund einer Martensitbildung zu einer Volumenänderung, die in der Beschichtung nicht auftritt, mit der Folge, dass sich zwischen dem Kern und der Beschichtung Spannungen bilden, die zu Rissen führen können.

EP 0 426 101 A1 beschreibt eine Extrudergehäusebauteil.
Aus der EP 1 626 100 A1 geht ein einsatzgehärtetes Edelstahlteil hervor.

Der Erfindung liegt die Aufgabe zugrunde, einen Verbundkörper der eingangs genannten Art zu schaffen, bei dem zwischen den Teilen im Vergleich zu den aus dem Stand der Technik bekannten Verbundkörpern eine stabilere Verbindung besteht.

Erfindungsgemäß wird diese Aufgabe dadurch gelöst, dass der zweite Teil aus einer Eisenbasis-, einer Kobaltbasis- oder einer Nickelbasislegierung gebildet ist und die erste Legierung die folgenden Bestandteile mit folgenden Anteilen in Gew.-% umfasst: C = 0,02 - 0,3; Si = 0,01 - 1,1; Mn = 0,01 - 2,0; P < 0,06; S < 0,5; Cr = 11,0 - 20,0; Mo = 0,3 - 1,0; Ni < 1,1; Nb oder/und Ta < 1,1; N < 0,03; Co < 1,1; Rest Fe und herstellungsbedingte Verunreinigungen, wobei der Fe-Gehalt mindestens 40 Gew.-% beträgt.

Bezüglich des Verfahrens wird die Aufgabe erfindungsgemäß dadurch gelöst, dass die erste Legierung mit folgenden Bestandteilen in folgenden Anteilen in Gew.-% gebildet wird: C = 0,02 - 0,3; Si = 0,01 - 1,1; Mn = 0,01 - 2,0; P < 0,06; S < 0,5; Cr = 11,0 - 20,0; Mo = 0,3 - 1,0; Ni < 1,1; Nb oder/und Ta < 1,1; N < 0,03; Co < 1,1; Rest Fe und herstellungsbedingte Verunreinigungen, wobei der Fe-Gehalt mindestens 40 Gew.-% beträgt.

Vorteilhaft wird durch den verhältnismäßig geringen Nickelgehalt im ersten Teil erreicht, dass sich die Länge des aus der Legierung gebildeten Teils beim Abkühlen bis Raumtemperatur gleichmäßig ändert. Insbesondere wird vermieden, dass sich bei Abkühlung im ersten Teil Nickelmartensit bildet, der im Temperaturbereich zwischen 150 und 300 °C zu einer Vergrößerung des Volumens und zur Versprödung führen und dadurch unerwünschte Spannungen zwischen dem ersten und dem zweiten Teil verursachen würde, nachdem sich die Verbindung der Teile unter Wärme- und ggf. Druckbehandlung durch Diffusion ausgebildet hat.

Aufgrund des verhältnismäßig geringen Kohlenstoffgehalts kommt es einer zu einer Umwandlung von Austenit in Ferrit und damit nur zu vergleichsweise geringen Volumenänderung, sodass keine grossen Spannungen entstehen, die für die Stabilität des Grundkörpers problematisch sind.
Die beanspruchte erste, ferritische Legierung ist aufgrund des großen Chromgehalts sehr korrosionsbeständig und ist mit einer Festigkeit, die vergleichbar ist mit derjenigen der Werkstoffe S355J2+N, C45E oder 1.4313, für die Anwendungen, für die der Verbundkörper infrage kommt, ausreichend fest und weist eine vergleichsweise geringe Härte und eine relativ große Zähigkeit auf. Darüber hinaus lässt sie sich gut zerspanend bearbeiten.

Es wird angestrebt, dass die Legierung frei ist von P, Ni, Nb/Ta, N und Co oder lediglich möglichst geringe Anteile an P, Ni, Nb/Ta, N und Co, die typischerweise als Verunreinigungen vorliegen, enthält.
In einer Ausführungsform der Erfindung weist die Legierung Schwefel mit einem Anteil von mindestens 0,03 Gew.-% auf, wobei der Anteil an Schwefel zweckmäßigerweise 0,15 - 0,35 Gew.-% beträgt.

Die obengenannten Verunreinigungen in der ersten Legierung können P, S, Ni, Nb/Ta, N und/oder Co mit einem jeweiligen Anteil < 0,01 Gew.-% umfassen. Weitere Verunreinigungen können z.B. durch Aluminium, Bor, Brom, Blei, Sauerstoff, Zink, Antimon, Arsen und/oder Zinn oder durch andere Elemente gebildet sein. Sie liegen typischerweise jeweilig in einem Anteil < 0,01 Gew.-% vor.

Die Eisenbasislegierung weist vorzugsweise zumindest 35 Gew.-%, besonders bevorzugt zumindest 50 Gew.-%, Eisen, die Kobaltbasislegierung vorzugsweise zumindest 35 Gew.-%, besonders bevorzugt zumindest 50 Gew.-%, Kobalt und die Nickelbasislegierung vorzugsweise zumindest 50 Gew.-% Nickel auf.

Die erste Legierung weist gute mechanische Eigenschaften als Trägermaterial auf und eignet sich darüber hinaus aufgrund der gut zueinander passenden Gitterstrukturen und der ähnlichen Ausdehnungskoeffizienten zur Verbindung durch Diffusion mit den letztgenannten Legierungen, die jeweils eine besonders große Härte aufweisen. Die Stabilität des Verbundkörpers wird nämlich weniger von der Dicke der Diffusionszone bestimmt, sondern hängt vielmehr von ab, ob sich die Gitterstrukturen der Legierungen der verschiedenen Teile ähneln. Auch wenn sich in dem Bereich, in dem es zu der Diffusion kommt, eine Übergangsgitterstruktur bildet, können sich zwischen den Teilen Spannungen bilden, die bei der Abkühlung zu Rissen im Bereich der Grenzfläche führen können, wenn sich die thermische Ausdehnungskoeffizienten der verschiedenen Teile zu stark unterscheiden.

Durch die Erfindung wird für die verschiedenen Teile des Verbundkörpers eine Werkstoffkombination bereitgestellt, mit der sich jeweilig gute mechanische Eigenschaften erreichen lassen und die darüber hinaus eine stabile Verbindung der Teile ermöglicht. Als besonders vorteilhaft erweist sich, dass nach der Verbindung der Teile miteinander, insbesondere durch eines der unten erläuterten Verfahren, keine zusätzliche Wärmebehandlung, insbesondere zum Anlassen, notwendig ist.

Die Eisenbasislegierung umfasst bevorzugt folgende Bestandteile in folgenden Anteilen (in Gew.-%): Fe ≥ 35, vorzugsweise Fe ≥ 50; C ≥ 0,5; Cr ≥ 3; V ≥ 1 und Ni > 0,01, vorzugsweise Ni ≥ 1, wobei die Eisenbasislegierung weitere Legierungselemente sowie Verunreinigungen aufweisen kann.
Zweckmäßigerweise enthält die Eisenbasislegierung höchstens 70 Gew.-% Fe, höchstens 4 Gew.-% C, höchstens 30 Gew.-% Cr, höchstens 15 Gew.-% V und/oder höchstens 10 Gew.-% Ni, vorzugsweise höchstens 5 Gew.-% Ni.
Die Eisenbasislegierung kann ferner Si, Mn, Mo, W, Co, Nb und/oder Ta, B, P und/oder S enthalten, wobei sie die nachfolgend genannten Elemente bevorzugt in folgenden Anteilen in Gew.-% aufweist:

| | | |
|---|---|---|
| - Si | > 0,3; | vorzugsweise < 2,0 |
| - Mn | > 0,1; | vorzugsweise < 2,0 |
| - Mo | > 0,1; | vorzugsweise < 2,5 |
| - W | < 13; | vorzugsweise > 0,01 |
| - Co | < 15; | vorzugsweise > 0,01 |
| - Nb/Ta | < 5; | vorzugsweise > 0,01 |
| - B | < 6; | vorzugsweise > 0,001 |
| - P | < 0,05; | vorzugsweise > 0,001 |
| - S | < 0,05; | vorzugsweise > 0,001 |

Die obengenannten Verunreinigungen in der Eisenbasislegierung können W, Co und/oder Nb/Ta mit einem jeweiligen Anteil bis zu 0,01 Gew.-%, B, P, und/oder S mit einem Anteil bis zu 0,001 Gew.-% umfassen. Weitere Verunreinigungen können z.B. durch Aluminium, Brom, Blei, Sauerstoff, Zink, Antimon, Arsen und/oder Zinn oder durch andere Elemente gebildet sein. Sie liegen typischerweise jeweilig in einem Anteil < 0,01 Gew. % vor.

In einer Ausgestaltung der Erfindung umfasst die Kobaltbasislegierung folgende Bestandteile mit folgenden Anteilen (in Gew.-%): Co ≥ 35 vorzugsweise Co ≥ 50; C ≥ 0,3; Cr ≥ 10; und W ≥ 2; wobei die Kobaltbasislegierung weitere Legierungselemente sowie Verunreinigungen aufweisen kann. Die Kobaltbasislegierung kann ferner (in Gew.-%) Mo ≥ 0,1, vorzugsweise Mo ≥ 2, enthalten.
Zweckmäßigerweise enthält die Kobaltbasislegierung höchstens 70 Gew.-% Co, höchstens 3,5 Gew.-% C, höchstens 40 Gew.-% Cr, und/oder höchstens 15 Gew.-% W. Vorzugsweise beträgt der maximale Gehalt an Mo 6 Gew.-%.
Die Kobaltbasislegierung kann ferner Si, Mn, Ni, V, Co, Nb und/oder Ta, Fe, P und/oder S enthalten, wobei sie die nachfolgend genannten Elemente bevorzugt in folgenden Anteilen in Gew.-% aufweist:

| | | |
|---|---|---|
| - Si | < 3; | vorzugsweise > 0,01 |
| - Mn | < 3; | vorzugsweise > 0,01 |
| - Ni | < 5; | vorzugsweise > 0,01 |
| - V | < 3; | vorzugsweise > 0,01 |
| - Nb/Ta | < 7; | vorzugsweise > 0,01 |
| - Fe | < 5; | vorzugsweise > 0,01 |
| - P | < 0,05; | vorzugsweise > 0,01 |
| -S | < 0,05; | vorzugsweise > 0,01 |

Die obengenannten Verunreinigungen in der Kobaltbasislegierung können Si, Mn, Ni, W, V, Nb/Ta, Fe, P oder/und S mit einem jeweiligen Anteil bis zu 0,01 Gew.-%, umfassen. Weitere Verunreinigungen können z.B. durch Aluminium, Brom, Blei, Sauerstoff, Zink, Antimon, Bor, Arsen und/oder Zinn oder durch andere Elemente gebildet sein. Sie liegen typischerweise jeweilig in einem Anteil < 0,01 Gew. % vor.

Die Nickelbasislegierung umfasst zweckmäßigerweise folgende Bestandteile mit folgenden Anteilen (in Gew.-%): Ni ≥ 50; Cr ≥ 5; B ≥ 0,2; Si ≥ 0,3, wobei die Nickelbasislegierung weitere Legierungselemente sowie Verunreinigungen aufweisen kann.
Zweckmäßigerweise enthält die Nickelbasislegierung höchstens 80 Gew.-% Ni, höchstens 25 Gew.-% Cr, höchstens 5 Gew.-% B und/oder höchstens 5 Gew.-% Si.

Die Nickelbasislegierung kann ferner C, Mn, Mo, W, Co, Nb/Ta, Fe, P und/oder S enthalten, wobei sie die nachfolgend genannten Elemente bevorzugt in folgenden Anteilen in Gew.-% aufweist:

| | | |
|---|---|---|
| - C | < 0,1; | vorzugsweise > 0,01 |
| - Mn | < 2; | vorzugsweise > 0,01 |
| - Mo | < 7; | vorzugsweise > 0,01 |
| - W | < 5; | vorzugsweise > 0,01 |
| - Nb/Ta | < 2; | vorzugsweise > 0,01 |
| - Fe | < 0,1; | vorzugsweise > 0,01 |
| - P | < 0,05; | vorzugsweise > 0,01 |
| - S | < 0,05; | vorzugsweise > 0,01 |

Die obengenannten Verunreinigungen in der Nickelbasislegierung können C, Si, Mn, Mo, W, V, Nb/Ta, Fe, P oder/und S mit einem jeweiligen Anteil bis zu 0,01 Gew.-%, umfassen. Weitere Verunreinigungen können z.B. durch Aluminium, Brom, Blei, Sauerstoff, Zink, Antimon, Bor, Arsen und/oder Zinn oder durch andere Elemente gebildet sein. Sie liegen typischerweise jeweilig in einem Anteil < 0,01 Gew. % vor.

In einer besonders bevorzugten Ausgestaltung der Erfindung liegt vor der Verbindung der Teile zumindest einer der Teile als Pulver vor, das vorzugsweise zu einem Formkörper gepresst ist oder durch eine Form zusammengehalten wird. Der Teil aus Pulver kann mit einem anderen oder mehreren anderen Teilen aus Pulver oder mit einem anderen oder mehreren anderen monolithischen Teilen verbunden werden.
Werden zwei der Teile aus Pulver miteinander verbunden, kann zwischen den Teilen ein Trennkörper, vorzugsweise ein Blech, angeordnet werden, um zu vermeiden, dass sich die Pulver der verschiedenen Teile vor oder während der Wärmebehandlung miteinander vermischen, da eine solche Mischung die Zusammensetzung der Legierungen im Bereich der Grenzfläche über die gewünschte Diffusion hinaus verändern kann. Der Trennkörper, der vorzugsweise aus Stahl, insbesondere Edelstahl, oder einer Nickel-Chrom-Legierung gebildet ist, weist zweckmäßigerweise eine Dicke von 1 bis 5 mm auf. Die Diffusion findet dann zwar zwischen dem ersten Teil und dem Trennkörper sowie dem Trennkörper und dem zweiten Teil statt. Dennoch wird auch in diesem Fall aufgrund der beanspruchten Legierungskombination die Ausbildung von Spannungen zwischen den Teilen und die damit verbundene Rissbildung vermieden.

Es versteht sich, dass erfindungsgemäß zur Herstellung des Verbundkörpers auch zwei oder mehrere monolithische Teile miteinander verbunden werden können.

In einer weiteren Ausführungsform der Erfindung bilden der erste und der zweite Teil unterschiedliche Abschnitte des Verbundkörpers oder eines aus dem Verbundkörper gebildeten Werkstücks, wobei die Abschnitte vorzugsweise zur Übernahme unterschiedlicher Funktionen bei Verwendung des Verbundkörpers bzw. des Werkstücks vorgesehen sind.

In einer Ausführungsform der Erfindung bildet der erste Teil einen Kern des Verbundkörpers und der zweite Teil einen äußeren Belag, insbesondere eine Beschichtung, des Kerns. Der Kern ist vorzugsweise zylindrisch oder quaderförmig. Er kann hohl, vorzugsweise hohlzylindrisch, sein. Alternativ kann der erste Teil einen äußeren Bereich des Verbundkörpers bilden.
Der zweite Teil kann, sofern der erste Teil einen Hohlkörper bildet, einen Belag, insbesondere eine Beschichtung, der Innenseite des Hohlkörpers bilden, oder einen Kern des Verbundkörpers bilden.

Zweckmäßigerweise ist der Verbundkörper vorgesehen derart, dass zwischen dem ersten Teil und dem zweiten Teil eine einzige zusammenhängende Grenzfläche gebildet ist, an der der erste und der zweite Teil direkt aneinander angeordnet sind oder lediglich durch den obengenannten Trennköper voneinander getrennt sind.

Ferner wäre vorstellbar, dass der Verbundkörper zwei oder mehrere Teile aus der ersten Legierung, die nicht unmittelbar miteinander verbunden sind, und/oder zwei oder mehrere Teile aus der zweiten Legierung, die nicht unmittelbar miteinander verbunden sind, aufweist.

Der erste Teil kann dann dank seiner obengenannten Eigenschaften besonders einfach, beispielsweise zerspanend, bearbeitet werden, um ihm eine Form zu geben, die für die jeweilige Anwendung in einem aus dem Verbundkörper zu bildenden Werkstück geeignet ist, und in dem Werkstück mechanische Belastungen aufnehmen, z.B. zur Einleitung ein Kraft in das Werkstück. Der zweite Teil weist je nach Wahl der Legierung die jeweiligen Eigenschaften der Eisenbasis-, Kobaltbasis- oder Nickelbasislegierung auf. Er kann beispielsweise eine besonders große Härte, eine besonders große Festigkeit, eine besonders große Zähigkeit und/oder eine besonders große Korrosionsbeständigkeit aufweisen. Er eignet sich dementsprechend insbesondere zur Bildung eines Belags oder einer Beschichtung des ersten Teils.

In einer besonders bevorzugten Ausführungsform der Erfindung bildet der Verbundkörper eine Schnecke eines Extruders, insbesondere eines Doppelschneckenextruders.

Während es vorstellbar wäre, die Teile durch Diffusionsschweißen miteinander zu verbinden, werden sie in einer bevorzugten Ausführungsform der Erfindung durch Heißisostatisches Pressen miteinander verbunden.
Da die Teile beim Heißisostatischen Pressen in eine gasdichte Kapsel gegeben werden, die als Druckübertragungsmittel dient, und die Kapsel in einem Autoklav unter erhöhter Temperatur durch Gasdruck gepresst wird, können die Teile an Grenzflächen, die eine vergleichsweise komplexe Formen aufweisen, miteinander zu dem Verbundkörper verbunden werden. Es können z.B. Verbundzylinder mit Innen- und/oder Aussenbeschichtung produziert werden oder Verbundkörper mit abgestuften Grenzflächenformen. Darüber hinaus eignet sich das Heißisostatische Pressen zur Bildung des Verbundkörpers aus zumindest einem Teil aus Pulver.

Zweckmäßigerweise werden die Teile beim Heißisostatischen Pressen mit einer Aufheizrate von 6 bis 10 k/min erhitzt und, ggf. abhängig von der Differenz im Ausdehnungskoeffizienten der Teile, mit einer Abkühlrate ≤ 3 K/min abgekühlt. Vorzugsweise werden bei einem Druck von 1000 bis 1200 bar, bevorzugt 1050 bis 1150 °C, während einer Dauer von 3 bis 4 h folgende Temperaturen in Abhängigkeit von der Legierung des zweiten Teils gehalten:
- Eisenbasislegierung: 1050 - 1180 °C
- Kobaltbasislegierung: 1100 - 1200 °C
- Nickelbasislegierung als Superlegierung: 1100 - 1200 °C
- Nickelbasishartstofflegierung (z.B. NiCrBSi): 900 - 1000 °C.

Beim Diffusionsschweißen dagegen werden die Teile in einer Vakuumkammer bei erhöhter Temperatur gegeneinandergepresst. Dieses Verfahren eignet sich zur Herstellung des Verbundkörpers aus bereits festen, monolithischen Teilen, deren Grenzfläche zwischen den Legierungen eine geometrisch, vergleichsweise einfache Form aufweist.

Die Erfindung wird nachfolgend anhand von Ausführungsbeispielen und der beiliegenden, sich auf die Ausführungsbeispiele beziehenden Zeichnungen näher erläutert. Es zeigen:
- Fig. 1: im Längsschnitt eine Kapsel, in der ein monolithischer Grundkörper und Pulver angeordnet sind, zur Bildung eines Halbzeugs zur Herstellung einer Schnecke für einen Doppelschneckenextruder,
- Fig. 2: im Querschnitt eine Kapsel zur Bildung eines erfindungsgemäßen Verbundkörpers durch Heißisostatisches Pressen, und
- Fig. 3: im Längsschnitt eine mit verschiedenen Pulvern gefüllte Kapsel zur Bildung eines erfindungsgemäßen Verbundkörpers durch Heißisostatisches Pressen.

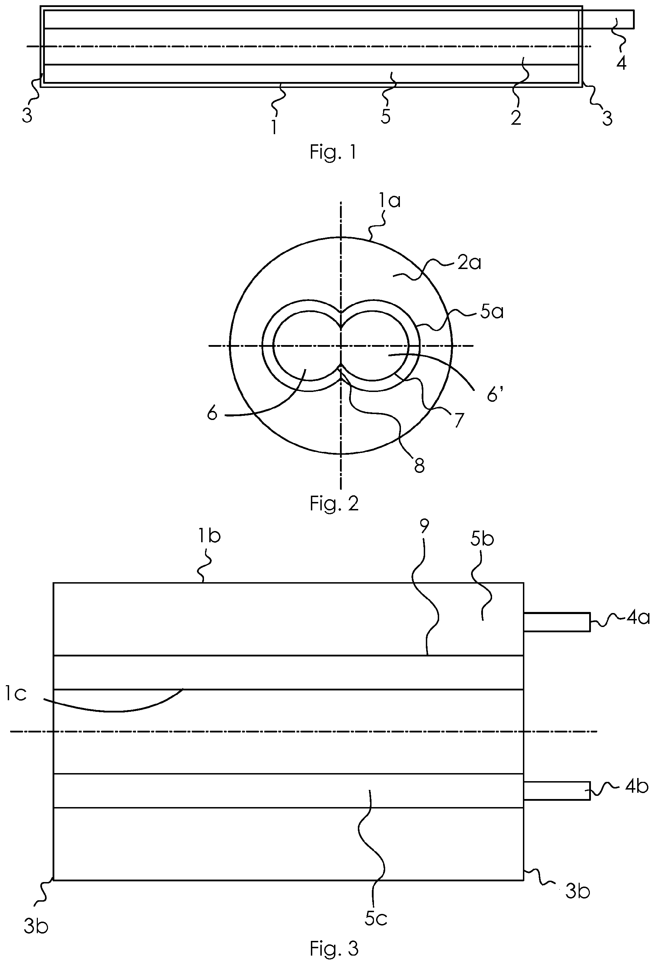

In Fig. 1 ist eine Kapsel 1 dargestellt, in der ein Kernteil 2 angeordnet ist, der schmelzmetallurgisch aus 1.4104 (X14CrMoS 17) hergestellt worden ist und durch zwei Deckel 3 in Zentrum der Kapsel 1 gehalten ist. Die Kapsel 1 und die Deckel 3 sind aus einem geringfügig legierten Baustahl gebildet. Durch ein Einfüllrohr 4 wird ein Pulver 5, das aus einer verschleiss- und korrosionsfesten Eisenbasislegierung mit folgender Zusammensetzung in Gew.-% eingefüllt und dabei ggf. gerüttelt: C = 2,6; Si = 0,6; Mn = 0,4; Cr = 26,0; Mo = 1,1; V = 2,7; Nb = 1,5; Ni = 0,4, Rest Eisen sowie herstellungsbedingte Verunreinigungen. Anschließend wird die Kapsel 1 evakuiert und gasdicht verschlossen. Bei anschließendem Heißisostatischen Pressen wird das Pulver 5 vollständig verdichtet und die Kapsel 1, das Pulver 5 und der Kernteil 2 verbinden sich durch Diffusion. Beim Heißisostatischen Pressen wird mit 7 K/min bis auf 1095 °C aufgeheizt, bei einem Druck von 1100 bar während 200 min diese Temperatur gehalten und danach mit 2,7 K/min abgekühlt.
Auf diese Weise wird ein Halbzeug für die Herstellung einer Schnecke eines Doppelschneckenextruders hergestellt. Durch eine nachfolgende mechanische Bearbeitung und Wärmebehandlung des Halbzeugs wird eine Schnecke gebildet, die die gewünschte Geometrie und Härte aufweist. Bedingt durch den hohen Schwefelgehalt lässt sich die Innenkontur des Kernteils 1, der zur Drehmomentübertragung vorgesehen ist, leicht mechanisch bearbeiten und dennoch eine hohe Korrosionsbeständigkeit und eine hohe mechanische Festigkeit erreichen, ohne dass sich im gebildeten Verbundkörper im Bereich der Grenzfläche Risse bilden.

Fig. 2 zeigt im Querschnitt eine äußere Kapsel 1a, in der ein Grundkörper 2a angeordnet ist, der aus 1.4003 (X2CrNi) gebildet ist und in den mechanisch zwei parallele Bohrungen 6,6' eingebracht worden sind, deren Querschnitte sich abschnittsweise überschneiden. In den Bohrungen 6,6' ist eine innere Kapsel 7 angeordnet worden derart, dass sich zwischen der inneren Kapsel 7 und dem Grundkörper 2a ein ringartiger Hohlraum bildet. Durch hier nicht gezeigte Deckel werden der Grundkörper 1a und die innere Kapsel 7 in der äußeren Kapsel 1a gehalten. Die äußere Kapsel 1a, die innere Kapsel 7 sowie die Deckel sind aus einem geringfügig legierten Baustahl gebildet. Durch ein hier nicht gezeigtes Füllrohr wird der Hohlraum zur Bildung einer Beschichtung auf der Innenseite des Grundkörpers 2a mit einem Pulver 5a aus einer verschleiss- und korrosionsfesten Nickelbasislegierung mit folgender Zusammensetzung in Gew.-% gefüllt und dabei ggf. gerüttelt: Cr = 17,1; C = 1,18; Fe = 0,8; Si = 4,2; B = 3,4; Rest Nickel und herstellungsbedingte Verunreinigungen. Anschließend wird die Kapsel 1a evakuiert, gasdicht verschlossen und danach mit folgenden Parametern heißisostatisch gepresst:
Aufheizrate: 8 K/min
Haltetemperatur: 1160 °C
Haltedauer: 230 min
Abkühlrate: 3 K/min
Dabei verbindet sich das Pulver 5a mit dem Grundkörper 2a und den Kapseln 1a und 7. Bedingt durch die Werkstoffauswahl des Grundkörpers 2a und einer angepassten Temperaturführung während des Abkühlens entstehen selbst in einem Zwickelbereich 8 nur geringe Spannungen. Nach dem Heißisostatischen Pressen ist eine zusätzliche Wärmebehandlung nicht notwendig, da die Beschichtung eine Härte von HRC = 58 aufweist. Der Grundkörper 2a hat eine Härte von HB < 200 bei einer Festigkeit von Rₘ = 500 MPa und lässt sich problemlos mechanisch bearbeiten. In einem Zwickelbereich 8 finden sich nach der Bearbeitung der Innenkontur keine Risse, da bei der für den Grundkörper 2a gewählten Legierung nur eine Gefügeumwandlung von Austenit in Ferrit mit vergleichsweise geringer Volumenänderung stattfindet. Die geringen Spannungen, die durch die geringfügig unterschiedlichen Ausdehnungskoeffizienten hervorgerufen werden, werden durch eine gesteuerte Abkühlung nach dem Heißisostatischen Pressen abgefangen.

In Fig. 3 ist im Schnitt eine hohlzylindrische Kapsel mit einer Außenwand 1b und einer Innenwand 1c zur Aufnahme von Pulver 5b,5c gezeigt, in der einer ebenfalls hohlzylindrische Trennwand 9 zur Trennen der Pulver 5b,5c vorgesehen ist. Die Kapsel 1b und die Trennwand 9 sind beidseitig mit Deckeln 3b gasdicht verschweißt, wobei die Trennwand 9 zentrisch in der Kapsel 1b angeordnet worden ist. Die Kapsel, die Deckel 3b und die Trennwand 9 sind aus Baustahl St. 37 gebildet. An einem der Deckel 3b sind Füllrohre 4a,4b zum Befüllen des Raums zwischen der Außenwand 1b und der Trennwand 9 sowie des Raums zwischen der Innenwand 1c und der Trennwand 9 gebildet. Durch das Füllrohr 4a wird ein verdüstes, homogenes Pulver 5b aus Stahl 1.4021 (X20Cr13) eingefüllt und dabei ggf. gerüttelt. Durch das Füllrohr 4b wird ein Pulver aus einer Kobaltbasislegierung 5c mit einer Zusammensetzung (Gew.-%) Cr = 29; W = 4,5; C = 1,4; Ni = 2,5; Fe = 1,2; Si = 1,0; Mo = 1,2; Mn = 0,5; Rest Co eingefüllt. Nach dem Einfüllen wird die Kapsel durch beiden Füllrohre 4a,4b evakuiert und danach gasdicht verschweißt. Anschließend wird die Kapsel nach Aufheizen mit einer Heizrate von 10 K/min bei 1120 °C während 180 min und einem Druck von 1050 bar heißisostatisch gepresst, wobei es zu Diffusion zwischen dem aus dem Pulver 5a gebildeten Teil des Verbundkörpers und der Trennwand 9 sowie der Trennwand 9 und dem Pulver 5b gebildeten Teil unter Ausbildung einer mechanischen Verbindung kommt. Abgekühlt wird mit einer Rate von 2,5 K/min. Eine zusätzliche anschließende Wärmebehandlung wird nicht durchgeführt. Nach der mechanischen Bearbeitung des auf diese Weise hergestellten Verbundkörpers zur Ausbildung der gewünschten Endform haben im Bereich der Grenzflächen zwischen dem aus dem Pulver 5a gebildeten Teil des Verbundkörpers, der Trennwand 9 und dem aus dem Pulver 5b gebildeten Teil keine Risse gebildet.

## Patentansprüche

1. Verbundkörper, der einen ersten Teil, der aus einer ersten Legierung gebildet ist, und einen zweiten Teil umfasst, der aus einer Eisenbasis-, einer Kobaltbasis- oder einer Nickelbasislegierung gebildet ist, wobei die Teile durch Diffusion von Legierungselementen des ersten und/oder des zweiten Teils in den jeweils anderen Teil miteinander verbunden sind,
wobei die erste Legierung die folgenden Bestandteile mit folgenden Anteilen in Gew.-% umfasst:
C = 0,02 - 0,3;
Si = 0,01 - 1,1;
Mn = 0,01 - 2,0;
P < 0,06;
S < 0,5;
Cr = 11,0 - 20,0;
Mo = 0,3 - 1,0;
Ni < 1,1;
Nb oder/und Ta < 1,1;
N < 0,03;
Co < 1,1;
Rest Fe und herstellungsbedingte Verunreinigungen.

2. Verbundkörper nach Anspruch 1,
**dadurch gekennzeichnet,**
**dass** die Eisenbasislegierung zumindest 35 Gew.-%, besonders bevorzugt 50 Gew.-%, Eisen, die Kobaltbasislegierung zumindest 35 Gew.-%, besonders bevorzugt 50 Gew.-%, Kobalt und die Nickelbasislegierung zumindest 50 Gew.-% Nickel aufweist.

3. Verbundkörper nach Anspruch 2,
**dadurch gekennzeichnet,**
**dass** die Eisenbasislegierung die folgenden Bestandteile mit folgenden Anteilen in Gew.-% umfasst:
Fe ≥ 35, vorzugsweise Fe ≥ 50;
C ≥ 0,5;
Cr ≥ 3;
V ≥ 1;
Ni ≥ 0,01, vorzugsweise Ni ≥ 1.

4. Verbundkörper nach Anspruch 2,
**dadurch gekennzeichnet,**
**dass** die Kobaltbasislegierung die folgenden Bestandteile mit folgenden Anteilen in Gew.-% umfasst:
Co ≥ 35, vorzugsweise Co ≥ 50;
Cr ≥ 10;
W ≥ 2;
C ≥ 0,3;
optional Mo ≥ 0,1.

5. Verbundkörper nach Anspruch 2,
**dadurch gekennzeichnet,**
**dass** die Nickelbasislegierung die folgenden Bestandteile mit folgenden Anteilen in Gew.-% umfasst:
Ni ≥ 50%;
Cr ≥ 5 %;
B ≥ 0,2 %;
Si ≥ 0,3 %.

6. Verbundkörper nach einem der Ansprüche 1 bis 5,
**dadurch gekennzeichnet,**
**dass** zwischen den Teilen eine Trennwand, vorzugsweise aus Blech, insbesondere Stahlblech, angeordnet ist.

7. Verfahren zur Herstellung eines Verbundkörpers, bei dem ein erster Teil, der aus einer ersten Legierung gebildet wird, mit zumindest einem anderen Teil, der aus einer Eisenbasis-, einer Kobaltbasis- oder einer Nickelbasislegierung gebildet wird, durch Diffusion von Legierungselementen des ersten und/oder des zweiten Teils in den jeweils anderen Teil miteinander verbunden wird,
**dadurch gekennzeichnet,**
**dass** die erste Legierung mit folgenden Bestandteilen in folgenden Anteilen in Gew.-% gebildet wird:
C = 0,02 - 0,3;
Si = 0,01 - 1,1;
Mn = 0,01 - 2,0;
P < 0,06;
S < 0,5;
Cr = 11,0 - 20,0;
Mo = 0,3 - 1,0;
Ni < 1,1;
Nb oder/und Ta < 1,1;
N < 0,03;
Co < 1,1;
Rest Fe und herstellungsbedingte Verunreinigungen.

8. Verfahren nach Anspruch 7,
**dadurch gekennzeichnet,**
**dass** die Körper mittels Heißisostatischem Pressen (HIP) oder durch Diffusionsschweißen miteinander verbunden werden, wobei zum Heißisostatischen Pressen der erste und der zweite Teil vorzugsweise gemeinsam in einer gasdichten Kapsel 1 angeordnet werden.

9. Verfahren nach Anspruch 7 oder 8,
**dadurch gekennzeichnet,**
**dass** die Eisenbasislegierung zumindest 35 Gew.-%, besonders bevorzugt mindestens 50 Gew.-%, Eisen, die Kobaltbasislegierung zumindest 35 Gew.-%, besonders bevorzugt mindestens 50 Gew.-%, Kobalt und die Nickelbasislegierung zumindest 50 Gew.-% Nickel aufweist.

10. Verfahren nach Anspruch 9,
**dadurch gekennzeichnet,**
**dass** die Eisenbasislegierung mit folgenden Bestandteile in folgenden Anteilen in Gew.-% gebildet wird:
Fe ≥ 35, vorzugsweise Fe ≥ 50;
C ≥ 0,5;
Cr ≥ 3;
V ≥ 1;
Ni ≥ 0,01, vorzugsweise Ni ≥ 1.

11. Verfahren nach Anspruch 9,
**dadurch gekennzeichnet,**
**dass** die Kobaltbasislegierung mit folgenden Bestandteilen in folgenden Anteilen in Gew.-% gebildet wird:
Co ≥ 35, vorzugsweise Co ≥ 50;
Cr ≥ 10;
W ≥ 2;
C ≥ 0,3;
optional Mo ≥ 0,1.

12. Verfahren nach Anspruch 11,
**dadurch gekennzeichnet,**
**dass** die Kobaltbasislegierung mit 0,1 ≤ Mo ≤ 6 Gew.-% gebildet wird.

13. Verfahren nach Anspruch 9,
**dadurch gekennzeichnet,**
**dass** die Nickelbasislegierung mit folgenden Bestandteilen in folgenden Anteilen in Gew.-% gebildet wird:
Ni ≥ 50%;
Cr ≥ 5 %;
B ≥ 0,2 %;
Si ≥ 0,3 %.

14. Verfahren nach einem der Ansprüche 7 bis 13,
**dadurch gekennzeichnet,**
**dass** vor der Verbindung der Teile zumindest einer der Körper als Pulver (5), vorliegt, das vorzugsweise zu einem Formkörper gepresst ist oder/und durch eine Form zusammengehalten wird.

15. Verfahren nach einem der Ansprüche 7 bis 14,
**dadurch gekennzeichnet,**
**dass** vor der Verbindung der Körper miteinander eine Trennwand aus Blech angeordnet wird, vorzugsweise wenn die Körper aus Pulver gebildet sind.

## Claims

1. Composite body which comprises a first part which is formed by a first alloy and a second part which is formed by an iron-based, cobalt-based or nickel-based alloy, wherein the parts have been joined to one another by diffusion of alloy elements of the first part and/or the second part into the other part
and the first alloy comprises the following constituents in the following proportions in % by weight:
C = 0.02 - 0.3;
Si = 0.01 - 1.1;
Mn = 0.01 - 2.0;
P < 0.06;
S < 0.5;
Cr = 11.0 - 20.0;
Mo = 0.3 - 1.0;
Ni < 1.1;
Nb or/and Ta < 1.1;
N < 0.03;
Co < 1.1;
balance Fe and production-related impurities.

2. Composite body according to Claim 1,
**characterized in that**
the iron-based alloy comprises at least 35% by weight, particularly preferably 50% by weight, of iron, the cobalt-based alloy comprises at least 35% by weight, particularly preferably 50% by weight, of cobalt and the nickel-based alloy comprises at least 50% by weight of nickel.

3. Composite body according to Claim 2,
**characterized in that**
the iron-based alloy comprises the following constituents in the following proportions in % by weight:
Fe ≥ 35, preferably Fe ≥ 50;
C ≥ 0.5;
Cr ≥ 3;
V ≥ 1;
Ni ≥ 0.01, preferably Ni ≥ 1.

4. Composite body according to Claim 2,
**characterized in that**
the cobalt-based alloy comprises the following constituents in the following proportions in % by weight:
Co ≥ 35, preferably Co ≥ 50;
Cr ≥ 10;
W ≥ 2;
C ≥ 0.3;
optionally Mo ≥ 0.1.

5. Composite body according to Claim 2,
**characterized in that**
the nickel-based alloy comprises the following constituents in the following proportions in % by weight:
Ni ≥ 50%;
Cr ≥ 5%;
B ≥ 0.2%;
Si ≥ 03%.

6. Composite body according to any of Claims 1 to 5,
**characterized in that**
a dividing wall, preferably composed of metal sheet, in particular steel sheet, is arranged between the parts.

7. Process for producing a composite body, in which a first part, which is formed from a first alloy, is joined to at least one other part which is formed by an iron-based, cobalt-based or nickel-based alloy by diffusion of alloy elements of the first and/or second part into the other part in each case,
**characterized in that**
the first alloy comprises the following constituents in the following proportions in % by weight:
C = 0.02 - 0.3;
Si = 0.01 - 1.1;
Mn = 0.01 - 2.0;
P < 0.06;
S < 0.5;
Cr = 11.0 - 20.0;
Mo = 0.3 - 1.0;
Ni < 1.1;
Nb or/and Ta < 1.1;
N < 0.03;
Co < 1.1;
Balance Fe and production-related impurities.

8. Process according to Claim 7,
**characterized in that**
the bodies are joined to one another by means of hot isostatic pressing (HIP) or by diffusion welding, within the case of hot isotactic pressing the first part and the second part preferably being arranged together in a gastight capsule 1.

9. Process according to Claim 7 or 8,
**characterized in that**
the iron-based alloy comprises at least 35% by weight, particularly preferably at least 50% by weight, of iron, the cobalt-based alloy comprises at least 35% by weight, particularly preferably at least 50% by weight, of cobalt and the nickel-based alloy comprises at least 50% by weight of nickel.

10. Process according to Claim 9,
**characterized in that**
the iron-based alloy comprises the following constituents in the following proportions in % by weight:
Fe ≥ 35, preferably Fe ≥ 50;
C ≥ 0.5;
Cr ≥ 3;
V ≥ 1;
Ni ≥ 0.01, preferably Ni ≥ 1.

11. Process according to Claim 9,
**characterized in that**
the cobalt-based alloy comprises the following constituents in the following proportions in % by weight:
Co ≥ 35, preferably Co ≥ 50;
Cr ≥ 10;
W ≥ 2;
C ≥ 0.3;
optionally Mo ≥ 0.1.

12. Process according to Claim 11,
**characterized in that**
the cobalt-based alloy comprises 0.1 ≤ Mo ≤ 6% by weight.

13. Process according to Claim 9,
**characterized in that**
the nickel-based alloy comprises the following constituents in the following proportions in % by weight:
Ni ≥ 50%;
Cr ≥ 5%;
B ≥ 0.2%;
Si ≥ 0.3%.

14. Process according to any of Claims 7 to 13,
**characterized in that**,
before joining of the parts, at least one of the bodies is present as powder (5) which has preferably been pressed to give a shaped body or/and is held together by a mould.

15. Process according to any of Claims 7 to 14,
**characterized in that**
a dividing wall composed of metal sheet is installed before joining of the bodies to one another, preferably in the case of the bodies being formed by powder.

## Revendications

1. Corps composite comprenant une première partie réalisée en un premier alliage et une seconde partie réalisée en un alliage à base de fer, à base de cobalt ou à base de nickel, les parties étant reliées l'une à l'autre par diffusion d'éléments d'alliage de la première et/ou de la seconde partie vers l'autre partie respective,
le premier alliage se composant des éléments suivants dans les proportions suivantes en pourcentage en poids :
C = 0,02 à 0,3 ;
Si = 0,01 à 1,1 ;
Mn = 0,01 à 2,0 ;
P < 0,06 ;
S < 0,5 ;
Cr= 11,0-20,0 ;
Mo = 0,3 à 1,0 ;
Ni < 1,1 ;
Nb ou/et Ta < 1,1 ;
N < 0,03 ;
Co < 1,1 ;
le reste étant Fe et des impuretés dues à la fabrication.

2. Corps composite selon la revendication 1,
**caractérisé en ce que**
l'alliage à base de fer contient au moins 35 % en poids, en particulier au moins 50 % en poids de fer, l'alliage à base de cobalt contient au moins 35 % en poids, en particulier au moins 50 % en poids de cobalt, et l'alliage à base de nickel contient au moins 50 % en poids de nickel.

3. Corps composite selon la revendication 2,
**caractérisé en ce que**
l'alliage à base de fer contient des éléments suivants dans les proportions suivantes en pourcentage en poids :
Fe ≥ 35, de préférence Fe ≥ 50 ;
C ≥ 0,5 ;
Cr ≥ 3 ;
V ≥ 1 ;
Ni ≥ 0,01, de préférence Ni ≥ 1.

4. Corps composite selon la revendication 2,
**caractérisé en ce que**
l'alliage à base de cobalt contient des éléments suivants dans les proportions suivantes en pourcentage en poids :
Co ≥ 35, de préférence Co ≥ 50 ;
C ≥ 10 ;
W ≥ 2 ;
C ≥ 03 ;
optionnellement Mo ≥ 0,1.

5. Corps composite selon la revendication 2,
**caractérisé en ce que**
l'alliage à base de nickel contient des éléments suivants dans les proportions suivantes en pourcentage en poids :
Ni ≥ 50 % ;
Cr ≥ 5 % ;
B ≥ 0,2 % ;
Si ≥ 0,3 %.

6. Corps composite selon l'une des revendications 1 à 5,
**caractérisé en ce que**
une cloison de séparation de préférence en tôle, en particulier en tôle d'acier, est disposée entre les parties.

7. Procédé pour réaliser un corps composite dans lequel une première partie, réalisée en un premier alliage, est reliée à au moins une autre partie, réalisée en un alliage à base de fer, à base de cobalt ou à base de nickel, par diffusion d'éléments d'alliage de la première et/ou de la seconde partie vers l'autre partie respective,
**caractérisé en ce que**
le premier alliage est réalisé des éléments suivants dans les proportions suivantes en pourcentage en poids :
C = 0,02 à 0,3 ;
Si = 0,01 à 1,1 ;
Mn = 0,01 à 2,0 ;
P < 0,06 ;
S < 0,5 ;
Cr= 11,0-20,0 ;
Mo = 0,3 à 1,0 ;
Ni < 1,1 ;
Nb ou/et Ta < 1,1 ;
N < 0,03 ;
Co < 1,1 ;
le reste étant Fe et des impuretés dues à la fabrication.

8. Procédé selon la revendication 7,
**caractérisé en ce que**
les corps sont reliés les uns aux autres par pressage isostatique à chaud (HIP) ou par soudage par diffusion, et pour le pressage isostatique à chaud la première et la seconde partie sont disposées de préférence conjointement dans une capsule 1 étanche aux gaz.

9. Corps composite selon la revendication 7 ou 8,
**caractérisé en ce que**
l'alliage à base de fer contient au moins 35 % en poids, en particulier au moins 50 % en poids de fer, l'alliage à base de cobalt contient au moins 35 % en poids, en particulier au moins 50 % en poids de cobalt, et l'alliage à base de nickel contient au moins 50 % en poids de nickel.

10. Procédé selon la revendication 9,
**caractérisé en ce que**
l'alliage à base de fer est réalisé par les éléments suivants dans les proportions suivantes en pourcentage en poids :
Fe ≥ 35, de préférence Fe ≥ 50 ;
C ≥ 0,5 ;
Cr ≥ 3 ;
V ≥ 1 ;
Ni ≥ 0,01, de préférence Ni ≥ 1.

11. Procédé selon la revendication 9,
**caractérisé en ce que**
l'alliage à base de cobalt est réalisé par les éléments suivants dans les proportions suivantes en pourcentage en poids :
Co ≥ 35, de préférence Co ≥ 50 ;
C ≥ 10 ;
W ≥ 2
C ≥ 03 ;
optionnellement Mo ≥ 0,1.

12. Procédé selon la revendication 11,
**caractérisé en ce que**
l'alliage à base de cobalt est réalisé avec 0,1 ≤ Mo ≤ 6 % en poids.

13. Procédé selon la revendication 9,
**caractérisé en ce que**
l'alliage à base de nickel est réalisé par les éléments suivants dans les proportions suivantes en pourcentage en poids :
Ni ≥ 50 % ;
Cr ≥ 5 % ;
B ≥ 0,2 % ;
Si ≥ 0,3 %.

14. Procédé selon l'une des revendications 7 à 13,
**caractérisé en ce que**
avant de relier les parties, l'un au moins des corps se présente sous forme de poudre (5) qui est de préférence pressée en un corps de formage et/ou qui est maintenue cohérente par un moule.

15. Procédé selon l'une des revendications 7 à 14,
**caractérisé en ce que**
avant de relier les corps les uns aux autres, on met en place une cloison de séparation en tôle, de préférence lorsque les corps sont réalisés en poudre.
